# FASCICULE DE BREVET EUROPEEN

(11) **EP 1 386 711 B1**
(45) Date de publication et mention de la délivrance du brevet: **28.05.2008**
(21) Numéro de dépôt: 03291710.6
(22) Date de dépôt: 09.07.2003
(51) Int. Cl.: B29C 44/12, B29C 44/14

(54) **Procédé pour réaliser une pièce revêtue d'un médaillon souple**
Verfahren zur Herstellung eines Formteils mit weichem Einsatzteil
Method of making an article with a soft insert

(30) Priorité: 30.07.2002 FR 0209685
(43) Date de publication de la demande: 04.02.2004
(73) Titulaire: Faurecia Interieur Industrie, 92000 Nanterre (FR)
(72) Inventeur: Delcros, Julien, Faurecia Intérieur Industrie, 60114 Meru (FR)
(74) Mandataire: Domenego, Bertrand

(56) Documents cités:
- EP-A- 0 023 194
- WO-A-99/37473
- DE-A- 2 438 367
- US-A- 5 017 115
- US-A- 5 133 912
- PATENT ABSTRACTS OF JAPAN vol. 1998, no. 02, 30 janvier 1998 (1998-01-30) -& JP 09 262845 A (NISHIKAWA KASEI CO LTD), 7 octobre 1997 (1997-10-07)

## Description

L'invention concerne la réalisation d'une pièce comprenant un élément support rigide présentant une face d'aspect dont une partie seulement est recouverte par un revêtement formant médaillon et procurant un toucher souple.

Une telle pièce est en particulier utilisée pour l'habillage intérieur d'un véhicule automobile, notamment en tant que planche de bord ou panneau de porte.

On connaît déjà des procédés permettant de réaliser de telles pièces. Ainsi, US-A-5 643 612 propose de :
- placer dans un moule de moussage ledit revêtement et l'élément support, ledit élément support présentant une zone en creux délimitée par un rebord périphérique et en regard de laquelle on dispose une surface d'accostage dudit revêtement, puis
- introduire de la mousse dans le moule, entre l'élément support et ledit revêtement, de façon à lier ledit revêtement et l'élément support.

Toutefois, la demanderesse s'est aperçue que ce procédé ne convient pas pour tous types de revêtement. En particulier, lorsqu'il n'est pas possible de thermoformer le revêtement sans dégrader ses caractéristiques esthétiques ou plus généralement lorsque le revêtement n'est pas dans un matériau capable de conserver une forme donnée, par exemple lorsqu'il est constitué de fibres naturelles (laine, coton, ...) ou de cuir, le revêtement trop souple ne peut empêcher la mousse de fuir entre lui et l'élément support.

Le document EP-A-0023194 décrit un procédé de fabrication de panneaux de revêtement dont une partie peut être constituée d'un élément qui a une couleur et un degré de finition de surface différents de ceux du reste du panneau. A cet effet, un élément rapporté peut être incorporé au panneau. Cet élément rapporté peut être constitué d'une couche de matière plastique, par exemple de mousse, disposée entre une peau et un support.

Le document WO-A-99/37473 décrit un procédé d'injection selon le préambule de la revendication 1 d'une matière élastomère entre un support et un manchon souple tenu par un moule pour la fabrication d'une poignée de motocyclette. Les extrémités du manchon souple sont tenues dans des bagues métalliques, et l'injection de l'élastomère moulable pousse les extrémités du manchon contre les bagues métalliques.

Un autre procédé connu consiste à plaquer le bord du revêtement contre l'élément support et à introduire de la mousse entre l'élément support et le revêtement. Ce procédé résout certes le problème d'étanchéité pour tout type de matériau de revêtement, mais le bord du revêtement étant apparent après moussage, il faut ensuite le recouvrir d'un enjoliveur.

Pour résoudre ces problèmes, un procédé selon la revendication 1 est proposé.

Cette solution est relativement simple, donc peu coûteuse, facile à mettre en oeuvre et permet de combiner les avantages des procédés précités, à savoir d'une part le camouflage d'une partie au moins du bord du revêtement et d'autre part l'absence de fuite de mousse visible entre le revêtement et l'élément support.

Selon une caractéristique complémentaire, conformément à l'invention, on ne lie le revêtement à l'élément de maintien que localement, en périphérie du revêtement.

En pratique, on pourra notamment utiliser un élément de maintien sensiblement annulaire ne s'étendant qu'en regard de la périphérie du revêtement.

Ainsi, la pièce conserve un toucher souple sur l'essentiel du revêtement. En outre, on réduit le poids et le coût de la pièce.

Lorsque l'élément de maintien est thermoformable, l'invention propose que :
- simultanément, on lie le revêtement à l'élément de maintien et on thermoforme l'élément de maintien, afin de conférer au revêtement ladite forme déterminée,
- puis, on place la surface d'accostage du revêtement en regard du bord périphérique de l'élément support, dans le moule de moussage.

En variante, conformément à l'invention, on réalise l'élément de maintien sensiblement suivant ladite forme déterminée, puis on lie le revêtement à l'élément de maintien.

L'invention va apparaître encore plus clairement dans la description qui va suivre, faite en référence aux dessins annexés dans lesquels :
- les figures 1 à 3 illustrent trois étapes successives d'un procédé conforme à l'invention,
- les figures 4 à 5 illustrent une variante de l'étape illustrée à la figure 1,
- la figure 6 illustre une variante de l'étape illustrée à la figure 2.

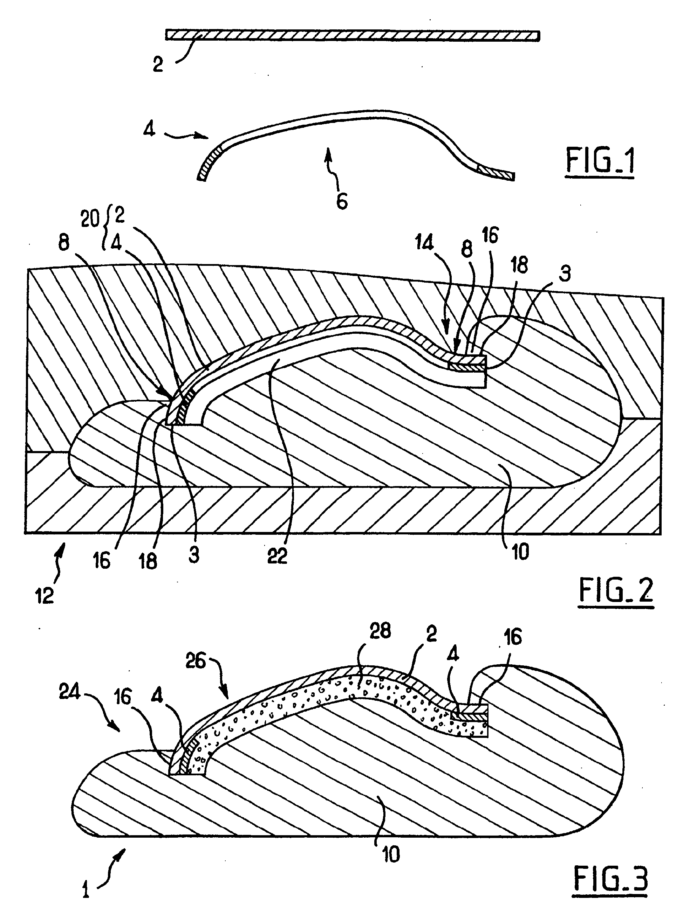

La figure 1 montre une feuille de revêtement 2 et un élément de maintien 4 formant conformateur.

La feuille de revêtement 2 est souple, flexible, de sorte qu'elle se déforme sous l'action de son propre poids. Elle peut notamment être constituée par une peau en cuir, un tissu ou un textile.

L'élément de maintien 4 relativement rigide possède une forme propre et est avantageusement obtenu de moulage. Il présente sensiblement une forme tridimensionnelle déterminée définissant un cadre ayant un large évidement 6 en son centre. L'élément de maintien est avantageusement réalisé en plastique. Il pourrait également comprendre du métal, du bois, un mélange de ces matériaux ou d'autres matériaux analogues.

Après découpage de la feuille de revêtement 2 aux dimensions voulues, celle-ci est fixée sur l'élément de maintien 4, par exemple par collage et définit avec ledit élément de maintien 4 un complexe 20. Du fait de l'évidement 6 ménagé dans le cadre 4, seule une zone marginale 8 s'étendant en périphérie de la feuille de revêtement 2 jusqu'au bord périphérique 3 est liée au cadre 4.

Puis, tel qu'illustré à la figure 2, le complexe ainsi qu'un élément support 10 sont placés dans un moule de moussage 12.

L'élément support 10, avantageusement en matériau plastique, est rigide. Il présente une zone en creux 14 délimitée par un rebord périphérique 16.

La feuille de revêtement 2 maintenue sur l'élément de maintien 4 est insérée dans la zone en creux 14. La forme de l'élément de maintien 4 est telle qu'une surface d'accostage 18 de la feuille de revêtement 2 s'étendant jusqu'au bord 3 vient sensiblement au contact du rebord périphérique 16. Le bord 3 de la feuille de revêtement 2, situé à l'extrémité de la surface d'accostage 18, est ainsi noyé dans la zone en creux 14.

Tel qu'illustré, l'élément de maintien 4 peut présenter une section recourbée sensiblement concave ou sensiblement plane en fonction de la forme de l'élément support 10.

De la mousse est alors introduite dans une cavité 22 s'étendant entre l'élément support 10 et le complexe 20. La résistance de l'élément de maintien 4 est telle qu'il ne se déforme sensiblement pas lors du remplissage de la cavité 22 sous l'action de la pression de la mousse injectée.

La surface d'accostage 18 maintenue en appui contre le rebord périphérique 16 de l'élément support 10 par l'élément de maintien 4 assure l'étanchéité de la cavité 22, empêchant ainsi la mousse de s'échapper entre le complexe 20 et l'élément support 10.

La pièce 1 obtenue est alors démoulée. Elle comprend l'élément support 10 dont une surface d'aspect 24 est en partie recouverte d'un médaillon 26 de l'élément de revêtement et une couche de mousse 28 interposée entre le médaillon 26 et l'élément support 10.

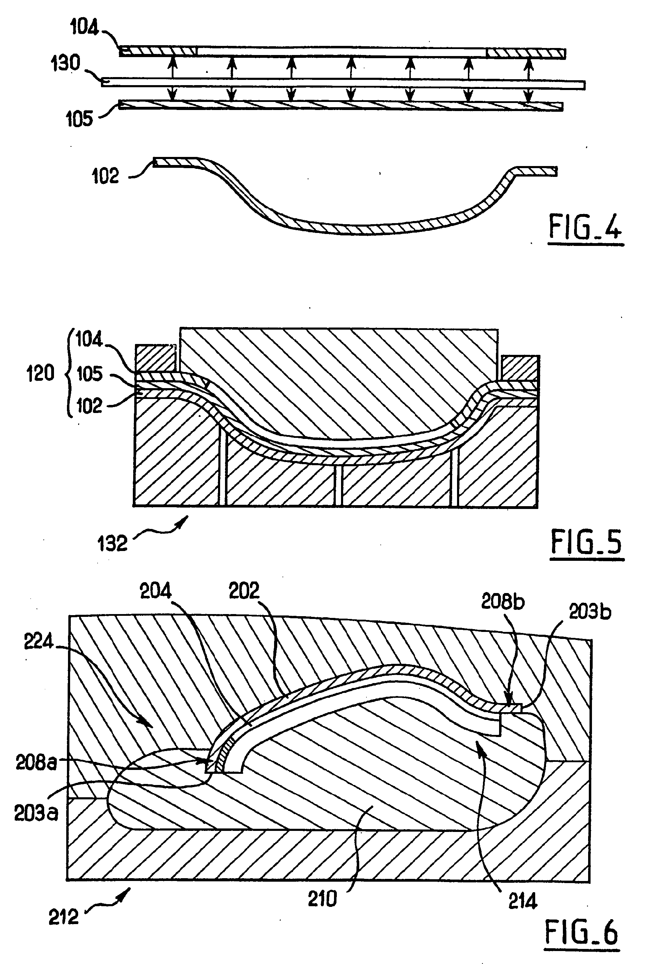

Les figures 4 et 5 illustrent deux étapes d'une variante de procédé pour réaliser un complexe 120. Les éléments correspondant à ceux illustrés aux figures 1 à 3 ont un repère augmenté de 100.

La figure 4 illustre une feuille de revêtement 102, semblable à la feuille de revêtement 2 mais sensiblement plus grande, et un élément de maintien 104 semblable à l'élément de maintien 4, mais sensiblement plan et thermoformable.

L'élément de maintien 104 est ramolli par un élément de chauffage 130, puis l'élément de maintien 104 est introduit avec l'élément de revêtement 102 dans un moule thermoformage 132, tel qu'illustré à la figure 5. L'élément de maintien 104 est alors mis en forme dans le moule de thermoformage et simultanément une zone marginale 108 de la feuille de revêtement 102 est liée par thermocollage sur l'élément de maintien 104.

Tel qu'illustré à la figure 4, la feuille de revêtement 2 n'étant pas dans un matériau thermoformable, ladite feuille de revêtement 2 est mise en forme avant introduction dans le moule de thermoformage 132, par exemple par assemblage (par couture) d'éléments développables.

Les figures 4 à 5 illustrent en outre un film d'étanchéité 105 chauffé par l'élément de chauffage 130 en même temps que l'élément de maintien 104, puis interposé entre la feuille de revêtement 102 et l'élément de maintien 104 dans le moule de thermoformage 132.

Ce film d'étanchéité 105 permet d'éviter que la mousse ne traverse la feuille de revêtement lors de l'opération de moussage illustrée à la figure 2. II est indépendant du procédé, le choix de son utilisation n'étant fonction que de la porosité de l'élément de revêtement. Par conséquent, il est facultatif dans la solution illustrée aux figures 4 et 5, et aurait pu être interposé entre la feuille de revêtement 2 et l'élément de maintien 4 dans la solution illustrée aux figures 1 à 3. Le film d'étanchéité 105 peut être constitué par un non-tissé, un film plastique, une fine couche de mousse ou analogue.

Après démoulage du moule de thermoformage 132, le complexe 120 comprenant la feuille de revêtement 102, le film d'étanchéité 105 et l'élément de maintien 104 est découpé aux dimensions voulues, puis introduit dans le moule de moussage 12 illustré à la figure 2 tel que décrit précédemment.

La figure 6 illustre le fait qu'il est possible de ne camoufler qu'une partie 203a seulement du bord périphérique 203 de l'élément de revêtement 202. Les éléments correspondant à ceux illustrés aux figures 1 à 3 ont un repère augmenté de 200.

L'élément de maintien 204 constitue un cadre ouvert, ici sensiblement en forme de U. Il soutient une partie 208a de la zone marginale 208 de la feuille de revêtement 202. Le reste 208b de la zone marginale 208 vient au contact de l'élément support 210, hors de la zone en creux 214. Lors de l'introduction de la mousse dans la cavité 222 du moule 212, l'ensemble de la zone marginale 208 est ainsi maintenu.

La partie 203b non camouflée du bord périphérique 203 de la feuille de revêtement 202 s'étendant ici en bordure de la surface d'aspect 224 sera ensuite dissimulée sous un cache, par exemple un bac vide-poche.

Bien entendu, l'invention n'est nullement limitée à la réalisation qui vient d'être décrite à titre d'exemple non limitatif. Ainsi, on pourrait prévoir d'obtenir l'élément de maintien et le film d'étanchéité de matière, en une seule pièce monobloc, par exemple de moulage, l'élément de maintien étant obtenu directement dans la forme voulue pour maintenir le revêtement dans le moule ou devant au préalable être mis en forme.

## Revendications

1. Procédé pour réaliser une pièce (1) comprenant un élément support rigide (10) dont une face d'aspect (24) est en partie recouverte par un revêtement souple (2, 26, 102), ledit procédé comprenant les étapes suivantes :
- lier ledit revêtement (2, 102) à un élément de maintien (4, 104) relativement rigide présentant une forme propre et une résistance telle qu'il ne se déforme sensiblement pas dans des conditions de moussage déterminées, afin de maintenir sensiblement ledit revêtement dans une forme déterminée,
- placer dans un moule de moussage (12) ledit revêtement lié à l'élément de maintien et l'élément support, et
- introduire de la mousse (28) dans le moule, entre l'élément support et ledit revêtement, dans lesdites conditions déterminées, de façon à lier ledit revêtement et l'élément support
**caractérisé en ce que**
ledit élément support présente une zone en creux (14) délimitée par un rebord périphérique (16), et **en ce qu'**une surface d'accostage (18) dudit revêtement est disposée en regard dudit rebord périphérique.

2. Procédé selon la revendication 1, **caractérisé en ce que** l'on ne lie le revêtement à l'élément de maintien que localement, en périphérie (8) du revêtement.

3. Procédé selon l'une des revendications 1 et 2, **caractérisé en ce que** l'élément de maintien (104) est thermoformable, et :
- on lie le revêtement (102) à l'élément de maintien (104) et simultanément on thermoforme l'élément de maintien, afin de conférer au revêtement la forme déterminée,
- puis, on place la surface d'accostage (18) du revêtement en regard du rebord périphérique (16) de l'élément support (10), dans le moule de moussage (12).

4. Procédé selon l'une quelconque des revendications précédentes, **caractérisé en ce que** l'on réalise l'élément de maintien (2) sensiblement suivant la forme déterminée, puis on lie le revêtement à l'élément de maintien (4).

## Claims

1. Process for the manufacture of an article (1) comprising a rigid support element (10) of which a "show" face (24) is partially covered by a supple covering (2, 26, 102), said process comprising the following steps:
- connecting said covering (2, 102) to a relatively rigid holding element (4, 104) having its own shape and a strength such that it is not substantially deformed under predetermined foaming conditions, in order substantially to maintain said covering in a predetermined shape,
- placing the support element and said covering connected to the holding element in a foaming mould (12) and
- introducing foam (28) into the mould, between the support element and said covering, under said predetermined conditions, in order to connect said covering and the support element,
**characterised in that**
said support element has a hollow region (14) delimited by a peripheral rim (16) and **in that** a docking surface (18) of said covering is disposed opposite said peripheral rim.

2. Process according to claim 1, **characterised in that** the covering is connected to the holding element only locally, at the periphery (8) of the covering.

3. Process according to either of claims 1 and 2, **characterised in that** the holding element (104) is thermoformable, and:
- the covering (102) is connected to the holding element (104) and, simultaneously, the holding element is thermoformed, in order to confer on the covering the predetermined shape,
- then the docking surface (18) of the covering is placed opposite the peripheral rim (16) of the support element (10), in the foaming mould (12).

4. Process according to any one of the preceding claims, **characterised in that** the holding element (2) is manufactured substantially in accordance with the predetermined shape, and then the covering is connected to the holding element (4).

## Patentansprüche

1. Verfahren zur Herstellung eines Formteils (1) mit einem starren Trägerelement (10), von dem eine Sichtseite (24) teilweise mit einem weichen Belag (2, 26, 102) versehen ist, das folgende Schritte umfasst:
- Verbinden des Belags (2, 102) mit einem Stützelement (4, 104), das verhältnismäßig starr ist und eine eigene Form und einen Verformungswiderstand aufweist, so dass es sich unter gegebenen Schäumungsbedingungen nicht wesentlich verformt, um den Belag im Wesentlichen in einer vorgegebenen Form zu halten,
- Platzieren des mit dem Stützelement verbundenen Belags in eine Schäumform (12), und
- Einbringen von Schaum (28) in die Form zwischen dem Trägerelement und dem Belag unter den gegebenen Bedingungen, um den Belag mit dem Trägerelement zu verbinden,
**dadurch gekennzeichnet, dass**
das Trägerelement einen hohlen Bereich (14) aufweist, der durch einen äußeren Rand (16) begrenzt ist, und dass eine Verbindungsfläche (18) des Belags dem äußeren Rand zugewandt angeordnet ist.

2. Verfahren nach Anspruch 1, **dadurch gekennzeichnet, dass** der Belag nur örtlich mit dem Stützelement an der Peripherie (8) des Belags verbunden ist.

3. Verfahren nach Anspruch 1 oder 2, **dadurch gekennzeichnet, dass** das Stützelement (104) thermoformbar ist und:
- der Belag (102) mit dem Stützelement (104) verbunden und das Stützelement gleichzeitig therisch verformt wird, um dem Belag die gewünschte Form zu verleihen,
- anschließend die Verbindungsfläche (18) des Belags gegenüber dem äußeren Rand (16) des Trägerelements (10) in der Schäumform (12) angeordnet wird.

4. Verfahren nach einem der vorhergehenden Ansprüche, **dadurch gekennzeichnet, dass** das Stützelement (2) im Wesentlichen gemäß der vorgegebenen Form erstellt und der Belag dann mit dem Stützelement (4) verbunden wird.
